(19) Europäisches Patentamt
European Patent Office
Office européen des brevets

(11) **EP 2 013 966 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(21) Anmeldenummer: **07728754.8**

(22) Anmeldetag: **03.05.2007**

(51) Int Cl.:
*H02P 6/12* (2006.01)  *H02H 7/08* (2006.01)

(86) Internationale Anmeldenummer:
**PCT/EP2007/054301**

(87) Internationale Veröffentlichungsnummer:
**WO 2007/128772 (15.11.2007 Gazette 2007/46)**

(54) **STEUEREINHEIT FÜR EINEN ELEKTROMOTOR, INSBESONDERE FÜR EINEN LÜFTERMOTOR**

CONTROL UNIT FOR AN ELECTRIC MOTOR, IN PARTICULAR FOR A FAN MOTOR

UNITÉ DE COMMANDE POUR UN MOTEUR ÉLECTRIQUE, EN PARTICULIER POUR UN MOTEUR À VENTILATEURS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **04.05.2006 DE 202006007136 U**

(43) Veröffentlichungstag der Anmeldung:
**14.01.2009 Patentblatt 2009/03**

(73) Patentinhaber: **Papst Licensing GmbH & Co. KG 78112 St Georgen (DE)**

(72) Erfinder: **LELKES, András 78073 Bad Dürrheim (DE)**

(74) Vertreter: **Barth, Stephan Manuel Reinhard, Skuhra, Weise & Partner GbR Patent- und Rechtsanwälte Friedrichstrasse 31 80801 München (DE)**

(56) Entgegenhaltungen:
**EP-A- 1 364 825    WO-A-03/009457 US-A- 5 023 531**

**Beschreibung**

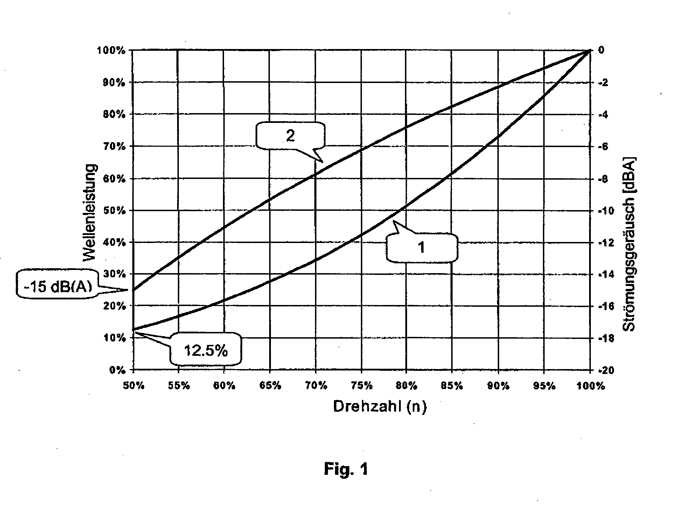

Die Erfindung betrifft eine Steuereinheit für einen Elektromotor. Solche Steuereinheiten werden eingesetzt, um die Drehzahl des Motors zu steuern beziehungsweise zu regeln. In vielen Fällen, insbesondere bei Lüfteranwendungen, wird die Motordrehzahl bedarfsgerecht heruntergesetzt, um die elektrische Aufnahmeleistung zu reduzieren. Im Falle eines Lüfters ist nicht nur der Leistungsbedarf sondern auch das Strömungsgeräusch stark drehzahlabhängig. Fig. 1 zeigt die Wellenleistung des Lüftermotors (1) und das Strömungsgeräusch des Lüfters (2) in Abhängigkeit von der Drehzahl. Der Drehmomentbedarf eines Lüfterrades wächst mit der zweiten Potenz der Drehzahl. Dadurch wächst die Wellenleistung des Motors sogar mit der dritten Potenz der Drehzahl. Das bedeutet, dass z.B. bei halber Drehzahl die Abgabeleistung des Motors nur 12,5% der Nennleistung erreicht. Die Wellenleistung sinkt sogar unter 1 %, wenn die Drehzahl kleiner als 21,5% der Nenndrehzahl ist. Das Strömungsgeräusch (2) sinkt erfahrungsgemäß mit 15-17 dB (A) bei der Halbierung der Drehzahl.

Neben dem Energiebedarf kann also auch das Geräusch wesentlich reduziert werden, falls drehzahlgesteuerte Lüftermotoren eingesetzt werden und wenn die Motordrehzahl und damit die Luftleitung bedarfsgerecht gesteuert wird. Die Drehzahl eines Lüfters kann abhängig von verwendeten Motortypen unterschiedlich beeinflusst werden. Bei Gleichstrommotoren wird die Drehzahl durch die Motorspannung gesteuert. Die Steuereinheit kann die Motorspannung mit einem getakteten Spannungssteller (Chopper) oder durch einen gesteuerten Gleichrichter vorgeben. Für Universalmotoren kann die Amplitude der Wechselspannung durch eine Phasenanschnittsteuerung eingestellt werden. Bei einem bürstenlosen Motor (auch BLDC oder elektronisch kommutierter Motor, EC-Motor genannt) übernimmt die Steuereinheit die elektronische Kommutierung. Die Steuereinheit kann zusätzlich durch entsprechende Taktung der Transistoren in der Kommutierungselektronik die Motorspannung und dadurch die Motordrehzahl beeinflussen. Bei Asynchronmotoren werden entweder die Frequenz und die Amplitude der Motorspannung mit einem Frequenzumrichter vorgegeben, oder bei kostengünstigen Systemen, insbesondere bei Lüfterantrieben, wird nur die Motorspannung z.B. durch eine Phasenanschnittsteuerung geändert (so genannte Schlupfsteuerung).

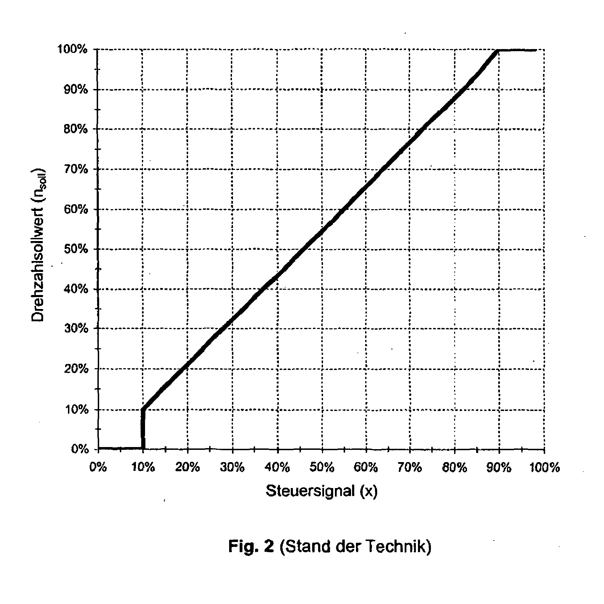

Üblicherweise wird die gewünschte Motordrehzahl durch eine überlagerte Steuerung festgelegt. Die Übertragung des Drehzahlsollwerts erfolgt oft mit einem Analogwert (z.B. 0-10 V) oder mit einem pulsweiten-modulierten, digitalen Signal (PWM). Fig. 2 zeigt eine für Lüfteranwendungen typische Eingangscharakteristik. Die überlagerte Steuerung muss in diesem Beispiel 0-10% Steuersignal (x) ausgeben, damit der Motor steht ($n_{soll}$=0). Nachteil dieser Methode ist, dass der Lüfter in einem Fehlerfall, wie zum Beispiel bei einem Leitungsbruch oder beim Kurzschluss in der Steuerleitung, stehen bleiben kann. In diesem Fall kann keine ausreichende Kühlung garantiert werden, was zu einem Ausfall in der Anlage führen kann. Dadurch können nicht unerhebliche Sachschäden entstehen, sowie hoher Schaden durch den Produktionsausfall.

Die US 5,023531 beschreibt eine Steuervorrichtung für einen kryogenen Kühler, wobei ein Motor des Kühlers zum Betreiben eines mechanischen Kühlkompressors mittels der Steuervorrichtung so betrieben werden soll, dass sich der Motor zumindest mit einer Mindestdrehzahl ungleich Null dreht. Die Steuervorrichtung umfasst auch eine Fehlererkennungsschaltung, mittels welcher ein Fehlerfall erkennbar sein soll. Bei einem Erkennen eines Fehlerfalls soll die Fehlererkennungsschaltung dazu ausgelegt sein, den Motor trotz des Fehlerfalls so anzutreiben, dass eine gleichbleibende Kühlung gewährleistbar sein soll.

Die WO 03/009457 A2 beschreibt ein Verfahren und eine Vorrichtung zur Überbrückung von kurzzeitigen Netzausfällen bei einem Matrixumrichter. Des Weiteren ist in der EP 1 364 825 A1 ein Verfahren zum Betreiben eines Elektromotors beschrieben, wobei ein Stromsensor, der zur Messung eines vom Elektromotor aufgenommenen Motorstroms verwendet wird, bei einer Leistungsanforderung zunächst als fehlerhaft angesehen und anschließend, sofern der gemessene Motorstrom einen vorgegebenen Schwellwert überschreitet, als fehlerfrei angesehen wird.

Der vorliegenden Erfindung liegt deshalb die Aufgabe zugrunde, die Eingangscharakteristik der Steuereinheit so zu gestalten, dass der Motor in einem solchen Fehlerfall mit einer vordefinierten Drehzahl weiterarbeitet.

<u>Offenbarung der Erfindung:</u>

Die Erfindung schafft eine Steuereinheit für einen Elektromotor mit den Merkmalen des Patentanspruchs 1.

Bei einem Fehler wie Leitungsbruch oder Kurzschluss in der Steuerleitung, oder bei dem Ausfall der überlagerten Steuerung ist die Wahrscheinlichkeit groß, dass das Steuersignal x die Werte 0% oder 100% aufnimmt.

Erfindungsgemäß wird somit die übliche Eingangscharakteristik nach Figur 2 so geändert, dass bei Eingangswerten in bestimmten Bereichen, in erster Linie bei etwa 0% bzw. 100%, die Steuerung den Motor vom aktuellen Sollwert abweichenden, vordefinierten Sollwert ansteuert.

In einer vorteilhaften Ausführung gibt die Steuerung in so einem Fehlerfall zusätzlich eine Warnung aus. Diese Warnung kann durch ein optisches oder akustisches Signal, durch ein analoges oder digitales elektronisches Signal, oder durch einen Kommunikationsbus, z.B. CAN-Bus, ausgegeben werden.

In den Figuren zeigen:

Fig. 1 zeigt die Wellenleistung des Lüftermotors und das Strömungsgeräusch des Lüfters in Abhängigkeit von der Drehzahl;

Fig. 2 zeigt eine für Lüfteranwendungen typische Eingangscharakteristik;

Fig. 3 zeigt die Eingangscharakteristik der Steuereinheit in einer vorteilhaften Ausführung;

Fig. 4 zeigt die erfindungsgemäße Eingangscharakteristik der Steuereinheit, wenn für den erkannten Fehlerfall ein Sollwert von $n_{soll}$=75% verwendet wird;

Fig. 5 zeigt den Programmablauf für die Realisierung der Eingangskennlinie;

Fig. 6 zeigt eine beispielhafte Schaltung; und

Fig. 7 eine weitere beispielhafte Schaltung mit einem Warnausgang.

Ausführungsbeispiele:

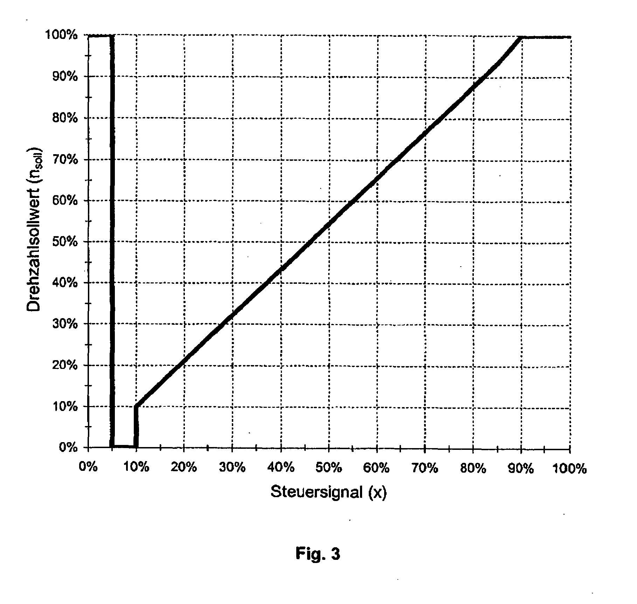

Fig. 3 zeigt die Eingangscharakteristik der Steuereinheit in einer vorteilhaften Ausführung. In diesem Beispiel muss die überlagerte Steuerung 5-10% Steuersignal (x) statt 0-10% ausgeben, um den Motor zu stoppen. Bei einem analogen Steuersignal (0-10V) bedeutet dies, dass der Motor bei einer Steuerspannung von 0,5 V bis 1 V steht ($n_{soll}$=0). Eine Steuerspannung unter 0,5 V zeigt einen Fehlerfall an (z.B. Ausfall der überlagerten Steuerung, Leitungsbruch oder Kurzschluss in der Steuerleitung). Bei einer Sollwertvorgabe mit PWM-gesteuertem digitalem Signal soll der Motor bei einem Steuersignal von 5 bis 10 % PWM stehen. Ein PWM-Faktor unter 5% bedeutet einen Fehlerfall. Das ist der Fall zum Beispiel, wenn das Steuersignal dauerhaft Low-Pegel aufweist (entspricht 0% PWM). In diesem Fall wird ein vordefinierter Drehzahlsollwert verwendet. In Bild 3 ist dieser Wert für den Fehlerfall $n_{soll}$=100%. Für Anwendungen, wie zum Beispiel bei Lüftern, wird dadurch ein sicherer Betrieb auch im Falle eines Fehlers in der Sollwertübergabe gewährleistet. Bei Lüfteranwendungen erfolgen in so einem Fehlerfall zwar keine Leistungs- und Geräuschreduzierung, aber eine ausreichende Kühlung ist gewährleistet.

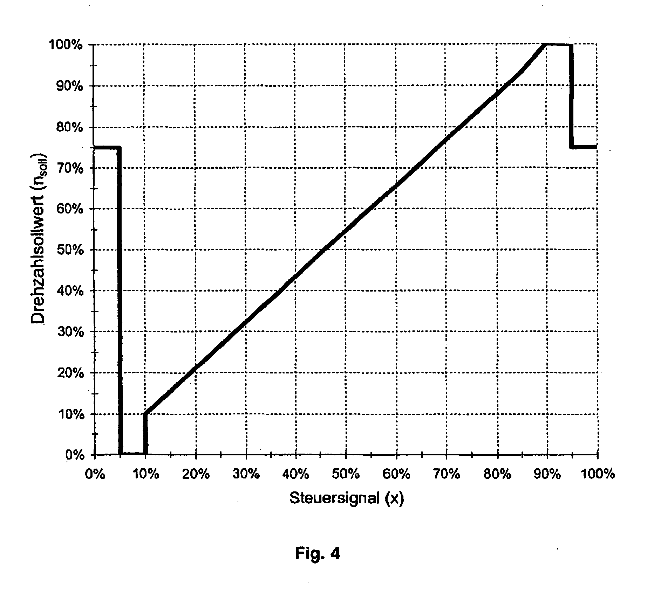

Es kann für den Fehlerfall auch ein von der maximalen (100 %) Drehzahlsollwert abweichender Sollwert verwendet werden. In einigen Fällen ist eine reduzierte Drehzahl für die Kühlung in Normalfall ausreichend, und die maximale Drehzahl (100 %) nur für bestimmte Ausnahmesituationen, wie zum Beispiel für den Ausfall eines der parallel arbeitenden Lüftern, vorgesehen. Figur 4 zeigt die erfindungsgemäße Eingangscharakteristik der Steuereinheit, wenn für den erkannten Fehlerfall ein Sollwert von $n_{soll}$=75 % verwendet wird. Dieser Wert wird also verwendet, wenn das Steuersignal x Werte in den Bereichen 0-5 % und 95 %-100 % annimmt.

Für die Realisierung einer Eingangskennlinie nach Figur 4 kann das analoge Steuersignal zuerst mit einem Analog-Digital-Wandler in einem digitalen Wert umgewandelt werden.

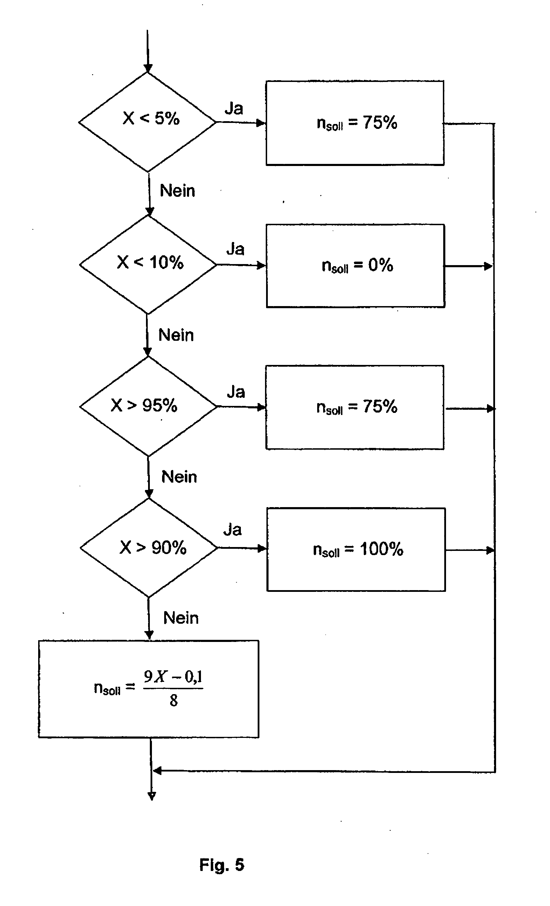

Danach wird das Signal digital weiterverarbeitet. Dies kann in einer vorteilhaften Ausgestaltung der Erfindung durch einen programmierbaren Bauteil wie Mikroprozessor, digitalen Signalprozessor (DSP) oder Mikrocontroller geschehen. Der Programmablauf für die Realisierung der Eingangskennlinie ist in Figur 5 dargestellt.

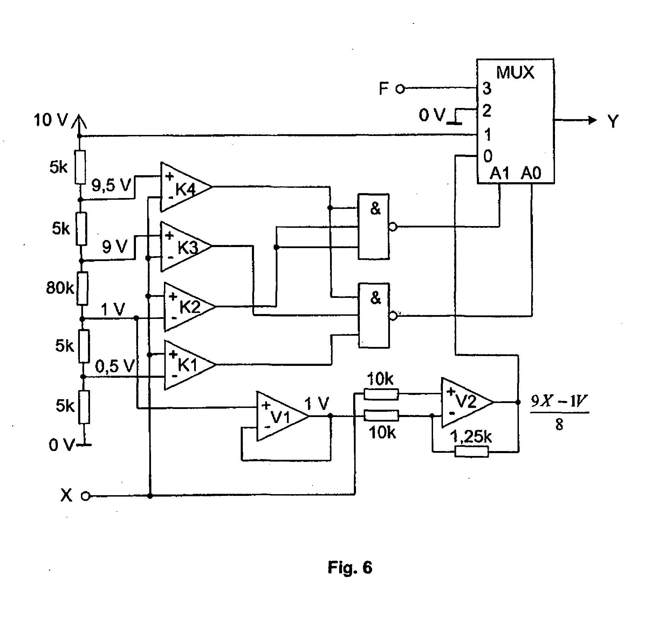

In einer weiteren Ausgestaltung der Erfindung wird die Eingangskennlinie mit Hilfe einer elektronischen Analogschaltung realisiert. Figur 6 zeigt eine beispielhafte Schaltung dazu. Diese Schaltung besteht aus vier analogen Komparatoren (K1 bis K4), zwei Operationsverstärkern (V1, V2), zwei digitalen NAND-Gattern und aus einem analogen Multiplexer (MUX). Die Komparatoren vergleichen das Steuersignal X mit den Spannungswerten an den Sprungstellen in der Eingangscharakteristik nach Figur 4, also mit 0,5 V, 1 V, 9 V und 9,5 V. Diese Spannungen werden hier mit einer Widerstandsreihe aus der 10 V Versorgungsspannung hergestellt. Die Ausgangssignale der Komparatoren werden mit den NAND-Gattern weiterverarbeitet und steuern den analogen Multiplexer, wie die folgende Tabelle zeigt.

Tab. 1

| Steuersignal X | K4 | K3 | K2 | K1 | A1 | A0 | Y |
|---|---|---|---|---|---|---|---|
| 0...0,5 V | 1 | 1 | 0 | 0 | 1 | 1 | F |
| 0,5...1 V | 1 | 1 | 0 | 1 | 1 | 0 | 0 V |
| 1...9 V | 1 | 1 | 1 | 1 | 0 | 0 | $\dfrac{9X - 1V}{8}$ |
| 9...9,5 V | 1 | 0 | 1 | 1 | 0 | 1 | 10 V |
| 9,5 ... 10V | 0 | 0 | 1 | 1 | 1 | 1 | F |

F ist hier der vordefinierte Sollwert für den Fehlerfall. Soll dieser Wert z. B. 75 % betragen, Figur 4 entsprechend, muss hier 7,5 V angeschlossen sein.

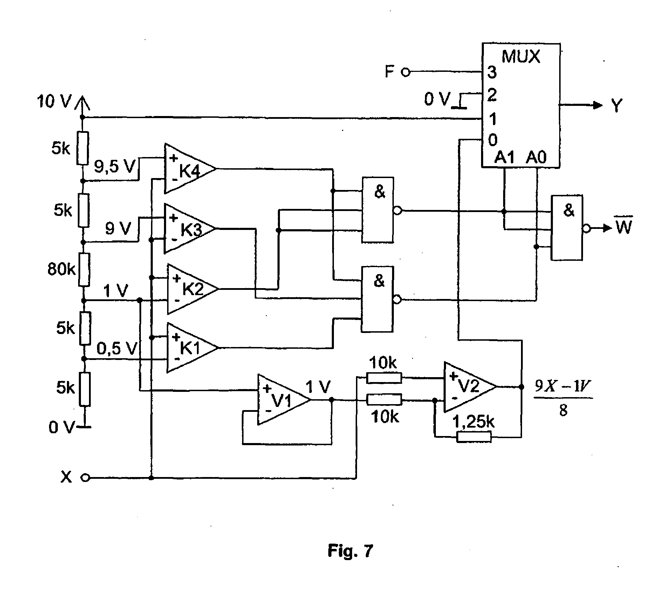

Diese Schaltung kann mit einem Warnausgang (W) ergänzt werden, wie es in Figur 7 dargestellt ist. Dieser Ausgang liefert im Normalfall eine logische "1", im Fehlerfall eine logische "0". Diese Warnung wird ausgegeben, falls das Steuersignal X Werte kleiner als 0,5 V oder größer als 9,5 V annimmt.

Die erfindungsgemäße Steuereinheit kann eine separate Einheit bilden, oder im Motorgehäuse oder im Klemmkasten des Motors integriert werden, damit Motor und Steuereinheit eine mechanische Einheit bilden. Die erfindungsgemäße Lösung kann vorteilhaft auch bei Kompaktventilatoren eingesetzt werden, wo Steuereinheit und Motor integrierte Teile des Kompaktventilators sind. Die erfindungsgemäße Lösung kann aber nicht nur bei Lüftern, Ventilatoren, Gebläsen und Pumpen eingesetzt werden, sondern bei jeder Anwendung, bei der es in einem Fehlerfall günstiger ist, den Motor mit einer vordefinierten Drehzahl zu betreiben, als den Motor abzuschalten. Dementsprechend ist die Erfindung nicht nur auf die dargestellten und beschriebenen Ausführungsbeispiele beschränkt, sondern umfasst auch alle im Sinne der Erfindung gleichwirkenden Ausführungen.

**Patentansprüche**

1. Steuereinheit für mindestens einen Elektromotor,
   wobei die Steuereinheit die Drehzahl des Elektromotors so steuert oder regelt, dass die Steuereinheit bei Steuerwerten in bestimmten Bereichen, die für einen Fehlerfall bei der Sollwertvorgabe, wie zum Beispiel Leitungsbruch, Spannungsausfall oder Kurzschluss, typisch sind, den Motor mit einem vom aktuellen Steuerwert abweichenden, vordefinierten Sollwert ansteuert;
   **dadurch gekennzeichnet, dass**
   die Steuereinheit bei Steuerwerten in einem Bereich unter einem ersten Schwellwert ungleich Null einer Steuerspannung und/oder in einem Bereich unter einem ersten Schwellwert ungleich Null einer Modulation den Motor mit dem vordefinierten Sollwert ansteuert; und die Steuereinheit bei Steuerwerten in einem Bereich zwischen dem ersten Schwellwert und einem höheren zweiten Schwellwert einer Steuerspannung und/oder in einem Bereich zwischen dem ersten Schwellwert und einem höheren zweiten Schwellwert einer Modulation den Motor anhält.

2. Steuereinheit nach Anspruch 1, **dadurch gekennzeichnet, dass** die Steuereinheit bei Steuerwerten in bestimmten Bereichen die für einen Fehlerfall bei der Sollwertvorgabe, wie zum Beispiel Leitungsbruch, Spannungsausfall oder Kurzschluss, typisch sind, eine Warnung ausgibt.

3. Steuereinheit nach Anspruch 1 oder 2, **dadurch gekennzeichnet, dass** der Steuerwert mit Hilfe eines analogen Spannungssignals vorgegeben wird und bei Spannungen, die bei typischen Fehlern vorkommen können, wie Nullspannung oder mit der Versorgungsspannung gleiche Signalspannung, der Motor mit dem vordefinierten Sollwert arbeitet.

4. Steuereinheit nach Anspruch 1 oder 2, **dadurch gekennzeichnet, dass** der Steuerwert mit Hilfe eines modulierten digitalen Signals, wie ein pulsweitenmoduliertes Signal, vorgegeben wird, und bei Modulationen, die bei typischen Fehlern vorkommen können, wie 0% oder 100% Modulation, der Motor mit dem vordefinierten Sollwert arbeitet.

5. Steuereinheit nach einem der vorhergehenden Ansprüche, **dadurch gekennzeichnet, dass** der vordefinierte Sollwert dem maximalen Sollwert entspricht.

6. Steuereinheit nach einem der vorhergehenden Ansprüche, **dadurch gekennzeichnet, dass** der Motor elektronisch kommutiert wird und die Steuereinheit die Funktion der elektronischen Kommutierung übernimmt.

7. Steuereinheit nach einem der vorhergehenden Ansprüche, **dadurch gekennzeichnet, dass** der Elektromotor einen Lüfter oder eine Pumpe antreibt.

8. Steuereinheit nach einem der vorhergehenden Ansprüche, **dadurch gekennzeichnet, dass** die Steuereinheit mit dem Motor eine mechanische Einheit bildet.

9. Steuereinheit nach Anspruch 8, **dadurch gekennzeichnet, dass** die Steuereinheit im Motorgehäuse integriert ist.

10. Steuereinheit nach Anspruch 8, **dadurch gekennzeichnet, dass** die Steuereinheit im Klemmkasten des Motors integriert ist.

11. Steuereinheit nach einem der vorhergehenden Ansprüche, **dadurch gekennzeichnet, dass** die Steuereinheit und der Motor Teile eines Kompaktventilators sind.

**12.** Steuereinheit nach einem der vorhergehenden Ansprüche, **dadurch gekennzeichnet, dass** der Sollwert mit einer elektronischen Analogschaltung verarbeitet wird.

**13.** Steuereinheit nach einem der Ansprüche 1 bis 11, **dadurch gekennzeichnet, dass** der Steuerwert mit einem Analog-Digital-Wandler in einen digitalen Wert umgewandelt wird und der Steuerwert digital weiterverarbeitet wird.

**14.** Steuereinheit nach Anspruch 13, **dadurch gekennzeichnet, dass** der digitale Steuerwert mit einem programmierbaren Bauteil wie Mikroprozessor, digitalem Signalprozessor oder Mikrocontroller verarbeitet wird.

**15.** Steuereinheit nach einem der vorhergehenden Ansprüche, **dadurch gekennzeichnet, dass** die Steuereinheit bei Steuerwerten in einem Bereich unter 0,5 V der Steuerspannung und/oder in einem Bereich unter 5% der Modulation den Motor mit dem vordefinierten Sollwert ansteuert; und
die Steuereinheit bei Steuerwerten in einem Bereich zwischen 0,5 bis 1 V der Steuerspannung und/oder in einem Bereich zwischen 5 bis 10% der Modulation den Motor anhält.

**Claims**

**1.** Control unit for at least one electric motor,
wherein the control unit regulates or controls the motor speed of the electric motor in such a way that in the case of control value in certain changes, which are typical of a fault when the setpoint value is being predefined such a fault being for example a line brake, a voltage failure or a short circuit, the control unit drives the motor with a predefined setpoint value which differs from the current control value;
**characterized in that**
the control unit controls the electric motor with the predefined setpoint value in case of control values in a range below a first threshold value unequal zero of a control voltage and/or in a region below a first threshold value unequal zero of a modulation; and
the control unit stops the motor in case of control values in the region between the first threshold value and a second higher threshold value of a control voltage and/or a region between the first threshold value and a second higher second threshold value of a modulation.

**2.** Control unit according to Claim 1, **characterized in that** in the case of control values in specific ranges which are typical of a fault when the setpoint value is being predefined, such a fault being, for example, a line break, a voltage failure or a short circuit, the control unit outputs a warning.

**3.** Control unit according to Claim 1 or 2, **characterized in that** the control value is predefined using an analogue voltage signal, and in the case of voltages which can occur in the case of typical faults such as zero voltage or a signal voltage which is identical to the supply voltage, the motor operates with a predefined setpoint value.

**4.** Control unit according to Claim 1 or 2, **characterized in that** the control value is predefined using a modulated digital signal such as a pulse-width-modulated signal, and in the case of modulations which can occur in the case of typical faults such as 0% or 100% modulation, the motor operates with a predefined setpoint value.

**5.** Control unit according to one of the preceding claims, **characterized in that** the predefined setpoint value corresponds to the maximum setpoint value (100%).

**6.** Control unit according to one of the preceding claims, **characterized in that** the motor is commutated electronically, and the control unit performs the function of the electronic commutation.

**7.** Control unit according to one of the preceding claims, **characterized in that** the electric motor drives a fan or a pump.

**8.** Control unit according to one of the preceding claims, **characterized in that** the control unit forms a mechanical unit with the motor.

**9.** Control unit according to Claim 8, **characterized in that** the control unit is integrated into the motor housing.

10. Control unit according to Claim 8, **characterized in that** the control unit is integrated into the terminal box of the motor.

11. Control unit according to one of the preceding claims, **characterized in that** the control unit and the motor are parts of a compact fan.

12. Control unit according to one of the preceding claims, **characterized in that** the setpoint value operates with an electronic analogue circuit.

13. Control unit according to one of Claims 1 to 11, **characterized in that** the control value is converted into a digital value using an analogue/digital converter, and the control value is further processed in digital form.

14. Control unit according to Claim 13, **characterized in that** the digital control value is processed with a programmable component such as a microprocessor, digital signal processor (DSP) or microcontroller.

15. Control unit according to one of the preceding claims, wherein the control unit controls the motor with the predefined control value in case of control values in a region below 0,5 V of the control voltage and/or in a region below 5% of the modulation; and the control unit stops the motor in case of control values in a region between 0,5 to 1 V of the control voltage and/or in a region between 5 and 10 % of the modulation.

**Revendications**

1. Unité de commande pour au moins un moteur électrique,
   l'unité de commande commandant ou régulant de telle sorte la vitesse de rotation du moteur électrique que, en présence de valeurs de commande dans certaines plages qui sont typiques d'un défaut lors de la prescription de valeur de consigne, par exemple une coupure de ligne, une panne de tension ou un court-circuit, l'unité de commande commande le moteur avec une valeur de consigne prédéfinie, différente de la valeur de commande actuelle, **caractérisée en ce que** l'unité de commande,

   - en présence de valeurs de commande dans une plage située en dessous d'une première valeur de seuil différente de zéro d'une tension de commande et/ou dans une plage située en dessous d'une première valeur de seuil différente de zéro d'une modulation, commande le moteur avec la valeur de consigne prédéfinie
   - et, en présence de valeurs de commande dans une plage située entre la première valeur de seuil et une deuxième valeur de seuil supérieure d'une tension de commande et/ou dans une plage située entre la première valeur de seuil et une deuxième valeur de seuil supérieure d'une modulation, arrête le moteur.

2. Unité de commande selon la revendication 1, **caractérisée en ce que** l'unité de commande, en présence de valeurs de commande dans certaines plages qui sont typiques d'un défaut lors de la prescription de valeur de consigne, par exemple une coupure de ligne, une panne de tension ou un court-circuit, fournit un avertissement.

3. Unité de commande selon la revendication 1 ou 2, **caractérisée en ce que** la valeur de commande est prescrite à l'aide d'un signal de tension analogique et, en présence de tensions qui peuvent apparaître en cas de défauts typiques, par exemple une tension nulle ou une tension de signal égale à la tension d'alimentation, le moteur travaille avec la valeur de consigne prédéfinie.

4. Unité de commande selon la revendication 1 ou 2, **caractérisée en ce que** la valeur de commande est prescrite à l'aide d'un signal numérique modulé, par exemple un signal à largeur d'impulsion modulée, et **en ce que**, en présence de tensions qui peuvent apparaître en cas de défauts typiques, par exemple 0 % ou 100 % de modulation, le moteur travaille avec la valeur de consigne prédéfinie.

5. Unité de commande selon l'une des revendications précédentes, **caractérisée en ce que** la valeur de consigne prédéfinie correspond à la valeur de consigne maximale.

6. Unité de commande selon l'une des revendications précédentes, **caractérisée en ce que** le moteur est commuté de façon électronique et **en ce que** l'unité de commande prend en charge la fonction de la commutation électronique.

7. Unité de commande selon l'une des revendications précédentes, **caractérisée en ce que** le moteur électrique entraîne un ventilateur ou une pompe.

**8.** Unité de commande selon l'une des revendications précédentes, **caractérisée en ce que** l'unité de commande forme avec le moteur une unité mécanique.

**9.** Unité de commande selon la revendication 8, **caractérisée en ce que** l'unité de commande est intégrée dans l'habillage du moteur.

**10.** Unité de commande selon la revendication 8, **caractérisée en ce que** l'unité de commande est intégrée dans la boîte de connexion du moteur.

**11.** Unité de commande selon l'une des revendications précédentes, **caractérisée en ce que** l'unité de commande et le moteur font partie d'un ventilateur compact.

**12.** Unité de commande selon l'une des revendications précédentes, **caractérisée en ce que** la valeur de consigne est traitée avec un circuit électronique analogique.

**13.** Unité de commande selon l'une des revendications 1 à 11, **caractérisée en ce que** la valeur de commande est transformée avec un convertisseur analogique-numérique en une valeur numérique et **en ce que** la valeur de commande est traitée ensuite de façon numérique.

**14.** Unité de commande selon la revendication 13, **caractérisé en ce que** la valeur de commande numérique est traitée avec un composant programmable, par exemple un microprocesseur, un processeur de signal numérique ou un microcontrôleur.

**15.** Unité de commande selon l'une des revendications précédentes, **caractérisée**

- **en ce que** l'unité de commande, en présence de valeurs de commande comprises dans une plage en dessous de 0,5 V de la tension de commande et/ou dans une plage située en dessous de 5 % de la modulation, commande le moteur avec la valeur de consigne prédéfinie, et
- **en ce que** l'unité de commande, en présence de valeurs de commande comprises dans une plage entre 0,5 et 1 V de la tension de commande et/ou dans une plage située entre 5 et 10 % de la modulation, arrête le moteur.

Fig. 1

**Fig. 2** (Stand der Technik)

**Fig. 3**

**Fig. 4**

Fig. 5

Fig. 6

**Fig. 7**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5023531 A
- WO 03009457 A2
- EP 1364825 A1